# EUROPEAN PATENT APPLICATION

(11) **EP 2 375 805 A1**
(43) Date of publication of application: **12.10.2011**
(21) Application number: 10726788.2
(22) Date of filing: 05.01.2010
(51) Int. Cl.: H04W 28/00

(54) **METHOD, NETWORK APPARATUS, USER EQUIPMENT AND SYSTEM FOR RESOURCE MANAGEMENT**

(30) Priority: 05.01.2009 CN 200910003432
(71) Applicant: Huawei Technologies Co., Ltd., Shenzhen, Guangdong 518129 (CN)
(72) Inventor: YU, Yinghui, Shenzhen Guangdong 518129 (CN)
(74) Representative: Epping - Hermann - Fischer
(86) International application number: PCT/CN2010/070023
(87) International publication number: WO 2010/075822

(57) **Abstract**

In the field of communications, a resource management method, a network device, a User Equipment (UE), and a system are provided. The method includes the following steps: the network side set information about a set of virtual cells; and sends the set information about the set of virtual cells to a UE. The network device includes a first setting unit and a sending unit. The UE includes a receiving unit and a processing unit. The system includes a network device. The technical solution brings the following beneficial effects: a set of virtual cells is introduced so that high-level resources are shared efficiently. Compared with the existing multi-cell setting method, information about multiple cells does not need to be set additionally, so that the resource management at the time when a UE communicates with multiple cells is greatly simplified.

## Description

This application claims priority to Chinese Patent Application No. CN200910003432.7, filed with the Chinese Patent Office on January 05, 2009 and entitled "RESOURCE MANAGEMENT METHOD, NETWORK DEVICE, USER EQUIPMENT, AND SYSTEM", which is hereby incorporated by reference in its entirety.

### FIELD OF THE INVENTION

The present invention relates to the field of communications, and in particular, to a resource management method, a network device, a User Equipment (UE), and a system.

### BACKGROUND OF THE INVENTION

Long Term Evolution (LTE) is a technology that evolves from the 3rd Generation (3G). The LTE can improve performance of a UE at the edge of a cell, improve cell capacity, and reduce system delay. Carrier aggregation is introduced into LTE R10 to further improve spectrum efficiency and user throughput of the system. The carrier aggregation means that a UE can use multiple component carriers simultaneously. One component carrier (cell) is a carrier band to which a UE of LTE R8 is accessible. The carrier bandwidth of the component carrier ranges from 1.25M to 20M. Each cell is a carrier to which the UE in the LTE R8 protocol is accessible. Therefore, each cell carries its respective synchronization channel and broadcast channel.

In the LTE R10 protocol, a Coordinated Multi-Point transmission (CoMP) technology is introduced to improve experience of an edge user. Through the CoMP technology, the UE can communicate with multiple cells. A cell is a basic unit in wireless communication. In an idle state, a UE camp on a cell, reads broadcast of the cell, and obtains common resource information of the cell. In a connected state, the UE is connected to a cell, the cell is called a serving cell, and the serving cell can allocate cell-level resources to the UE, for example, allocate UE identifiers (IDs) in a set of cells, or set physical channels. No matter in the idle or connected state, the synchronization channel, the pilot signal and the broadcast channel are cell-level resources. Furthermore, the network side performs measurement-related setting by using a cell as a unit, and the UE performs measurement operation with a cell as a unit according to the setting.

To improve handover performance of the UE, in the connected state, the UE uses multiple sets of dedicated resources. Each set of dedicated resources is used to communicate with one cell. Taking the UE communication with three cells simultaneously as an example, the cell information set by the network side for the UE is shown in Table 1:

**Table 1**

| **Cell 1** | **Cell 2** | **Cell 3** |
|---|---|---|
| **UE ID1** | **UE ID2** | **UE ID3** |
| Radio Bearer (RB) setting (including only RB setting, Packet Data Convergence Protocol (PDCP) setting, RLC (Power Line Communication) setting, partial transmission channel setting) | | |

| (Partial transmission channel resource 1) | (Partial transmission channel resource 2) | (Partial transmission channel resource 3) |
|---|---|---|
| Physical channel resource 1 | Physical channel resource 2 | Physical channel resource 3 |
| - Cell scrambling code 1; | - Cell scrambling code 2; | - Cell scrambling code 3; |
| - Cell high-level ID 1; | - Cell high-level ID 2; | - Cell high-level ID 3; |
| - Channel setting 1 | - Channel setting 2 | - Channel setting 3 |

### Table 1: Information set by the network side for the UE

After analyzing the prior art, the inventor of the present invention finds that: when the UE uses multiple cells, the network side needs to allocate multiple sets of resources to the UE, and the method for allocating multiple sets of resources to the UE has high complexity with respect to resource management.

### SUMMARY OF THE INVENTION

To simplify complexity of resource management at the time when a UE communicates with multiple cells, embodiments of the present invention provide a resource management method, a network device, a UE, and a system. The technical solution is as follows.

An embodiment of the present invention provides a resource management method , where the resource management method includes:
setting, by network side, information about a set of virtual cells; and
sending the set information about the set of virtual cells to a UE.

An embodiment of the present invention provides a network device, where the network device includes: a first setting unit and a sending unit;
the first setting unit, configured to set information about a set of virtual cells; and
the sending unit, configured to send the information about the set of virtual cells set by the first setting unit to a UE.
An embodiment of the present invention provides a UE, where the UE includes: a receiving unit and a processing unit;
the receiving unit, configured to receive information about a set of virtual cells sent by a network device; and
the processing unit, configured to carry out corresponding processing according to the information about the set of virtual cells received by the receiving unit.
An embodiment of the present invention provides a resource management system, where the resource management system includes: a network device;
the network device, configured to set information about a set of virtual cells and send the set information about the set of virtual cells to a UE.

The technical solution according to the embodiments of the present invention brings the following beneficial effects: a set of virtual cells is introduced so that network resources are shared efficiently. Compared with the multi-cell setting method in the prior art, the embodiments of the present invention do not need to set information about multiple cells additionally, so that the resource management at the time when the UE communicates with multiple cells is simplified.

### BRIEF DESCRIPTION OF THE DRAWINGS

FIG. 1 is a schematic flowchart of a resource management method according to a first embodiment of the present invention;
FIG. 2 is a schematic diagram of a set of virtual cells in an aggregation scenario and a CoMP scenario according to the first embodiment of the present invention; and
FIG. 3 is a schematic structural diagram of a network device according to a third embodiment of the present invention.

### DETAILED DESCRIPTION OF THE EMBODIMENTS

To make objectives, the technical solution, and merits of the present invention clearer, the following describes the embodiments of the present invention in more detail with reference to accompanying drawings.

### Embodiment 1

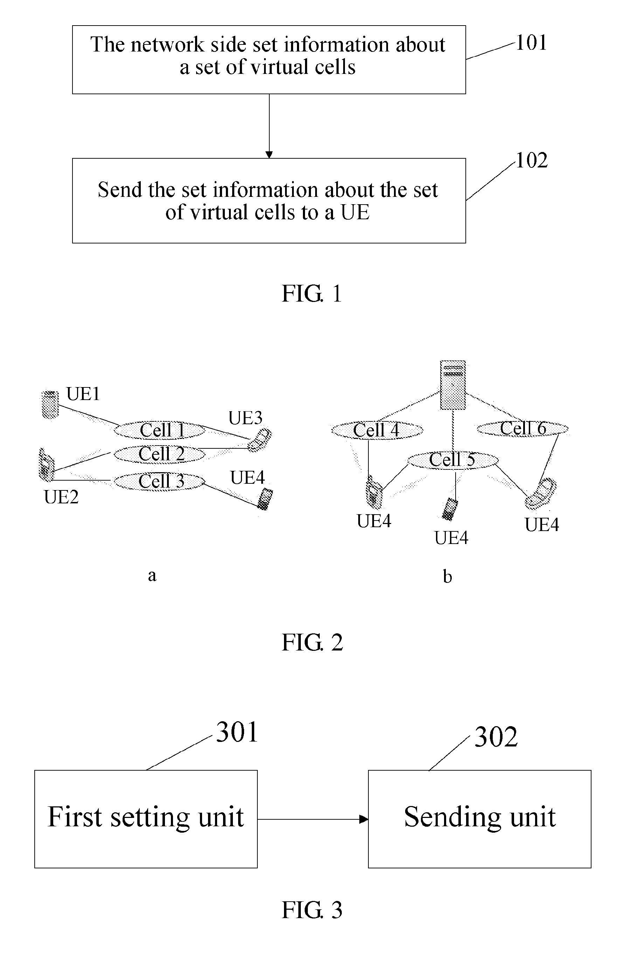

As shown in FIG. 1, an embodiment of the present invention provides a resource management method. The embodiment of the present invention is applicable to an access technology in which multiple cells serve one UE simultaneously. The method includes the following steps.

Step 101: The network side set information about a set of virtual cells.

The embodiment of the present invention takes LTE R10 as an example, and is also applicable to other access technologies in which multiple cells serve one UE simultaneously. In the LTE R10, the set of virtual cells is a set of aggregated cells in a base station or cells in a CoMP mode. The cells with only unidirectional resources being used can also be added into the set of virtual cells. That is to say, a set of virtual cells refers to multiple cells at the same frequency or a different frequency that communicate with the UE, and such cells may be centralized or distributed with respect to geographical location. In the embodiment of the present invention, as regards the LTE R10 technology, FIG. 2(a) is a schematic diagram of a set of virtual cells in an aggregation scenario. In FIG. 2(a), UE1, UE2 and UE3 are covered in the LTE R10 technology, and it can be supposed that UE1, UE2 and UE3 support communication with multiple cells; UE4 is a UE of LTE R8, and does not support communication with multiple cells. Therefore, for UE4, no set of virtual cells exists. UE1 is a UE of LTE R10, but UE1 communicates with only one cell by reason of a service. Therefore, UE1 may not use a set of virtual cells. For UE2 and UE3 of LTE R10, UE2 communicates with cell 2 and cell 3, but UE3 communicates with cell 1 and cell 2. All the cells used for the aggregation technology are cell 1, cell 2 and cell 3. The three cells form a set of virtual cells. FIG. 2(b) is a schematic diagram of a set of virtual cells in the CoMP mode. Like the aggregation scenario, cell 4, cell 5 and cell 6 form a set of virtual cells.

As regards a setting of a set of virtual cells, the use ofUEs may also be disregarded, and all cells located in the same location (for example, in the same base station) are used as component cells of the set of virtual cells.

Information about the set of virtual cells includes the following information: an ID of the set of virtual cells, information about each cell in the set of virtual cells, common information of each cell, or antenna setting of each cell, or any combination thereof. The information about each cell in the set of virtual cells includes: an ID of each cell, a service direction, bandwidth, a frequency and/or whether being an anchor. The service direction is uplink and/or downlink. That is, when the set information about the set of virtual cells is set, any of such information, or any combination thereof may be set. For example, when the set information about the set of virtual cells is set, the information about the set of virtual cells may include: an ID of the set of virtual cells, information about each cell in the set of virtual cells, common information of each cell, or antenna setting of each cell, or any combination thereof. For example, the information about each cell in the set of virtual cells may also include: an ID of each cell, a service direction, bandwidth, a frequency, or whether being an anchor, or any combination thereof. In this embodiment, the service direction for example may be uplink and/or downlink. In the following embodiments, settings of the information about the set of virtual cells, the information about each cell in the set of virtual cells, and the service direction may refer to the description above and is not provided again. The common information of each cell and the antenna setting of each cell are intended for each cell in the set of virtual cells.

Taking the three cells in FIG. 2(a) as an example, as shown in Table 2, the information about the set of virtual cells may include:

**Table 2**

| **ID of a virtual cell, including a scrambling code and a high-level ID** | | | | | |
|---|---|---|---|---|---|
| **Uplink** | | | **Downlink** | | |
| Scrambling | Scrambling | Scrambling | Scrambling | Scrambling | Scrambling |
| code of cell 1 | code of cell 2 | code of cell 3 | code of cell 1 | code of cell 2 | code of cell 3 |
| High-level | High-level ID of | High-level ID of | High-level ID of | High-level ID of | High-level ID |
| ID of cell 1 | cell 2 | cell 3 | cell 1 | cell 2 | of cell 3 |
| Bandwidth 1 | Bandwidth 2 | Bandwidth 3 | Bandwidth 1 | Bandwidth 2 | Bandwidth 3 |
| (B1) | (B2) | (B3) | (B1) | (B2) | (B3) |
| Frequency 1 | Frequency 2 (f2) | Frequency 3 (f3) | Frequency 1 (f1) | Frequency 2 (f2) | Frequency 3 (f3) |
| (f1) | | | | | |
| Anchor (yes | Anchor (yes or | Anchor (yes or | Anchor (yes or | Anchor (yes or | Anchor (yes |
| or no) | no) | no) | no) | no) | or no) |

### Table 2: Information about a set of virtual cells set by the network side

The network side or the UE may select a cell in the set of virtual cells according to a preset rule, and use the cell as an anchor cell. Through the anchor cell, the information about the set of virtual cells is transmitted.

In the case of symmetry between uplink and downlink, after an anchor cell is selected in the uplink direction, the symmetrical downlink cell is also an anchor cell; in the case of non-symmetry between uplink and downlink, an anchor cell is selected in the uplink direction and the downlink direction respectively.

If an anchor cell is selected, the virtual cell ID is formed of the scrambling code and the high-level ID of the anchor cell. If no anchor cell is selected, the network side sets a virtual cell ID or uses a scrambling code and a high-level ID of an existing cell. In this embodiment, a cell ID such as an ID of a virtual cell, an ID of an anchor cell or an ID of an existing cell includes a scrambling code and a high-level ID, and is not provided again in the following embodiments.

Information about a set of virtual cells further includes a common resource on each cell, for example, a Random Access Channel (RACH) resource.

Step 102: Send the set information about the set of virtual cells to a UE.

The UE may be a UE that uses resources of multiple cells in the set of virtual cells, or a UE supporting communication with multiple cells in the set of virtual cells. For example, in FIG. 2(a), the UEs that use the set of virtual cells are UE2 and UE3; UE1 communicates with only one cell by reason of a service of UE1, and does not use the set of virtual cells, but UE1 supports communication with multiple cells in the set of virtual cells.

Specifically, the set information about the set of virtual cells may be sent to the UE in a broadcast or signaling manner.

Before the network side set the information about the set of virtual cells, the method further includes:
receiving a result of measuring a signal of a neighboring cell sent by the UE.

Accordingly, the setting, by the network side, the information about the set of virtual cells specifically is:
setting, by the network side, the information about the set of virtual cells according to the result of measuring the signal of the neighboring cell sent by the UE.

The set of virtual cells may also be a set of virtual cells based on a UE. For example, in FIG. 2(a), the set of virtual cells of UE2 is formed of cell 2 and cell 3, and the set of virtual cells of UE3 is formed of cell 1 and cell 2. Therefore, the cells that serve the UE may change. For example, when the UE moves out of its set of virtual cells, or after the UE updates the set of virtual cells, IDs of UEs may conflict, or settings of RBs may conflict, and the UE needs to update its UE ID or RB setting. Therefore, the set of virtual cells needs to be maintained and updated by the network side and the UE.

The method may further include: allocating resources to the UE according to the situation of the cells used by the UE. The resources allocated to the UE include the ID information and RB information for the UE in the set of virtual cells.

Specifically, the resources allocated to the UE are shown in Table 3.

**Table 3**

| **UE ID** |
|---|
| RB setting, PDCP setting, RLC setting, and partial transmission channel resources: integrating resources of virtual cells, and setting one or more transmission channel resources |

### Table 3: Resources allocated by the network side to the UE

The UE ID is a unique ID in the set of virtual cells, or a unique ID in the component cell.

If multiple associated UE IDs need to be used in the set of virtual cells, a UE ID includes association between any UE ID and multiple UE IDs. If the UE IDs that need to be used in the set of virtual cells are not associated with each other, one UE ID is used. This UE ID is an ID that identifies the UE in a wireless network, and may be a C-RNTI or another ID that is unique in an access node. Multiple UE IDs may be allocated to the UE in multiple cells.

Because the UE previously knows the scrambling code of the virtual cell, a high-level ID of the cell, and frequency information of the channel setting, no more physical channel resource needs to be allocated at the time of allocating resources to the UE.

When the UE changes a cell (including changing an anchor cell) in the set of virtual cells, because the information about the set of virtual cells is already set, it is not required to reallocate a C-RNTI, an RB ID or a physical channel, and it is only required to update a part of the resources set in Table 3.

Before the sending the set information about the set of virtual cells to the UE, the method further includes:
receiving a notification of the UE, where the notification of the UE indicates a capability reported by the UE; or indicates a requirement that the UE needs to communicate with multiple cells.

The method further includes:
setting measurement control information for the UE according to the situation of the cells used by the UE so that the UE performs measurement according to the measurement control information. The setting the measurement control information includes: setting a measurement object as the set of virtual cells; setting measurement bandwidth as a sum of bandwidth of the cells in the set of virtual cells, or a part of the sum; and in the measurement reporting control, reporting the set of virtual cells as a cell.

For example, the UE uses cell 1, cell 2 and cell 3. The measurement control information set for the UE according to the situation of the cells used by the UE is shown in Table 4.

**Table 4**

| **Measurement object** | **Measurement bandwidth** | **Reporting control** |
|---|---|---|
| Set of virtual cells | Sum (B1+B2+B3) of bandwidth of cells or a part of the sum | Number of reported cells +1 |

### Table 4: Measurement control information set by the network side for the UE

Referring to Table 4, the set measurement bandwidth may be the sum (B1+B2+B3) of the bandwidth of the cells, or the bandwidth of one of the cells, or the sum of bandwidth of two of the cells, or any part of the sum of the bandwidth of the cells.

The measurement object may also be set as one or more cells in the set of virtual cells. In this embodiment, the cells may be all cells in the set of virtual cells. Accordingly, the information about the set of virtual cells should include at least the following information: an ID of the set of cells, a cell ID, a frequency, bandwidth, or antenna port setting, or any combination thereof.

However, in the prior art, the measurement control information set by the network side for the UE is shown in Table 5.

**Table 5**

| **Measurement object** | **Measurement bandwidth** | **Reporting control** |
|---|---|---|
| Cell 1 | Bandwidth (B1) of cell 1 | Number of reported cells +1 |
| Cell 2 | Bandwidth (B2) of cell 2 | Number of reported cells +1 |
| Cell 3 | Bandwidth (B3) of cell 3 | Number of reported cells +1 |

### Table 5: Measurement control information set by the network side for the UE

It can be seen from comparison between Table 4 and Table 5 that, in Table 4 according to the embodiment of the present invention, the measurement control information set by the network side for the UE is obviously much less than the measurement control information set by the network side for the UE in the prior art.

The embodiment of the present invention brings the following beneficial effects: a set of virtual cells is introduced so that high-level resources are shared efficiently; compared with the multi-cell setting method in the prior art, the embodiment of the present invention does not need to set information about multiple cells additionally (including a scrambling code and a high-level ID of a cell, IDs of the UE in multiple cells, and physical channel setting), so that the resource management at the time when the UE communicates with multiple cells is greatly simplified.

### Embodiment 2

An embodiment of the present invention provides a resource management method. This embodiment is applicable to an access technology in which multiple cells serve one UE simultaneously. The method includes the following steps.

Step 201: The network side set information about a set of virtual cells.

Step 202: Sending the set information about the set of virtual cells to a UE in an idle state that camp on the set of virtual cells.

The information about the set of virtual cells refers to Table 3 above.

The method further includes:
changing, by the UE, the camping cell in the set of virtual cells.

The UE uses obtained broadcast information after changing the camping cell in the set of virtual cells.

The method further includes:
when the UE camp on the set of virtual cells to perform access, using, by the UE, an optimal resource of multiple cells in the set of virtual cells without being limited to a resource of one cell to perform access. The optimal resource includes the RACH resource.

The method further includes:
setting measurement control information for the UE so that the UE performs measurement according to the measurement control information. The Setting the measurement control information includes: setting a measurement object as the set of virtual cells; and setting measurement bandwidth as a sum of bandwidth of the cells in the set of virtual cells, or a part of the sum.

For example, the UE uses cell 1, cell 2 and cell 3. The measurement control information set for the UE is shown in Table 6.

**Table 6**

| **Measurement objet** | **Measurement bandwidth** |
|---|---|
| Set of virtual cells | Sum (B1+B2+B3) of bandwidth of cells or a part of the sum |

### Table 6: Measurement control information set by the network side for the UE

The embodiment of the present invention brings the following beneficial effects: a set of virtual cells is introduced so that high-level resources are shared efficiently; the UE can obtain the overall information about the set of virtual cells; and the UE can further change the camping cell in the set of virtual cells flexibly without the need of reading broadcast information again.

### Embodiment 3

Referring to FIG. 3, an embodiment of the present invention provides a network device. This embodiment is applicable to an access technology in which multiple cells serve one UE simultaneously. The network device includes:
a first setting unit 301 and a sending unit 302.

The first setting unit 301 is configured to set information about a set of virtual cells.

This embodiment takes LTE R10 as an example, and is also applicable to an access technology in which multiple cells serve one UE simultaneously. In the LTE R10, the set of virtual cells is a set of aggregated cells in a base station or cells in a CoMP mode. The cells with only unidirectional resources being used can also be added into the set of virtual cells. That is to say, a set of virtual cells refers to multiple cells at the same frequency or a different frequency that communicate with the UE, and such cells may be centralized or distributed with respect to geographical location. In the embodiment of the present invention, as regards the LTE R10 technology, FIG. 2(a) is a schematic diagram of a set of virtual cells in an aggregation scenario. In FIG. 2(a), UE1, UE2 and UE3 are covered in the LTE R10 technology, and it can be supposed that UE1, UE2 and UE3 support communication with multiple cells; UE4 is a UE of LTE R8, and does not support communication with multiple cells. Therefore, for UE4, no set of virtual cells exists. UE1 is a UE of LTE R10, but UE1 communicates with only one cell by reason of a service. Therefore, UE1 may not use a set of virtual cells. For UE2 and UE3 of LTE R10, UE2 communicates with cell 2 and cell 3, but UE3 communicates with cell 1 and cell 2. All the cells used for the aggregation technology are cell 1, cell 2 and cell 3. The three cells form a set of virtual cells. FIG. 2(b) is a schematic diagram of a set of virtual cells in the CoMP mode. Like the aggregation scenario, cell 4, cell 5 and cell 6 form a set of virtual cells.

As regards a setting of a set of virtual cells, the use ofUEs may also be disregarded, and all cells located in the same location (for example, in the same base station) are used as component cells of the set of virtual cells.

Specifically, the first setting unit is configured to set the following information: an ID of the set of virtual cells, information about each cell in the set of virtual cells, common information of each cell, or antenna setting of each cell, or any combination thereof. Taking the three cells in FIG. 2(a) as an example, the information about the set of virtual cells is shown in Table 3 above.

The sending unit 302 is configured to send the information about the set of virtual cells set by the first setting unit 301 to a UE.

The UE may be a UE that uses resources of multiple cells in the set of virtual cells, or a UE supporting communication with multiple cells in the set of virtual cells. For example, in FIG. 2(a), the UEs that use the set of virtual cells are UE2 and UE3; UE1 communicates with only one cell by reason of a service of UE1, and does not use the set of virtual cells, but UE1 supports communication with multiple cells in the set of virtual cells.

For example, the sending unit 302 is configured to send the information about the set of virtual cells to the UE that uses the resources of the multiple cells in the set of virtual cells, or to the UE supporting communication with the multiple cells in the set of virtual cells.

Specifically, the set information about the set of virtual cells may be sent to the UE through broadcast or signaling.

The network device further includes a receiving unit, which is configured to receive a result of measuring a signal of a neighboring cell sent by the UE.

Accordingly, the first setting unit is configured to set the information about the set of virtual cells according to the result of measuring the signal of the neighboring cell.

The set of virtual cells may also be a set of virtual cells based on a UE. For example, in FIG. 2, the set of virtual cells of UE2 is formed of cell 2 and cell 3, and the set of virtual cells of UE3 is formed of cell 1 and cell 2. In this case, the cell that serves the UE may change. For example, when the UE moves out of its set of virtual cells, or after the UE updates the set of virtual cells, IDs of UEs may conflict, or setting of RBs may conflict, and the UE needs to update its UE ID or RB setting. Therefore, the set of virtual cells needs to be maintained and updated by the network side and the UE.

The network device further includes an allocating unit, which is configured to allocate resources to the UE according to the situation of the cells used by the UE. The allocated resources may include the ID information and RB information for the UE in the set of virtual cells. The allocated resources are shown in Table 7:

**Table 7**

| **UE ID** |
|---|
| RB setting, PDCP setting, RLC setting, and partial transmission channel resources: integrating |
| resources of virtual cells, and setting one or more transmission channel resources |

### Table 7: Resources allocated by the allocating unit to the UE

The network device further includes a second setting unit, which is configured to set measurement control information for the UE according to the situation of the cells used by the UE so that the UE performs measurement according to the measurement control information. The setting the measurement control information includes: setting a measurement object as the set of virtual cells; setting measurement bandwidth as a sum of bandwidth of the cells in the set of virtual cells, or a part of the sum; and in the measurement reporting control, reporting the set of virtual cells as a cell. The measurement control information set by the second setting unit for the UE is shown in Table 8:

**Table 8**

| **Measurement object** | **Measurement bandwidth** | **Reporting control** |
|---|---|---|
| Set of virtual cells | Sum (B1+B2+B3) of bandwidth of cells or a part of the sum | Number of reported cells +1 |

### Table 8: Measurement control information set by the second setting unit for the UE

When the UE camp on the set of virtual cells and is in an idle state, the second setting unit is further configured to set measurement control information for the UE in the idle state so that the UE performs measurement according to the measurement control information. The setting, by the second setting unit, the measurement control information for the UE in the idle state includes: setting the measurement object as the set of virtual cells; setting the measurement bandwidth as a sum of bandwidth of the cells in the set of virtual cells, or a part of the sum, as shown in Table 9:

**Table 9**

| **Measurement object** | **Measurement bandwidth** |
|---|---|
| Set of virtual cells | Sum (B1+B2+B3) of bandwidth of cells or a part of the sum |

### Table 9: Measurement control information set by the second setting unit for the UE in the idle state

The embodiment of the present invention brings the following beneficial effects: a set of virtual cells is introduced so that high-level resources are shared efficiently; compared with the multi-cell setting method in the prior art, the embodiment of the present invention does not need to set information about multiple cells additionally (including a scrambling code and a high-level ID of a cell, IDs of the UE in multiple cells, and physical channel setting), so that the resource management at the time when the UE communicates with multiple cells is greatly simplified. Moreover, the UE in the idle state can further change the camping cell in the set of virtual cells flexibly without the need of reading broadcast information again.

### Embodiment 5

An embodiment of the present invention provides a UE. The present invention is applicable to an access technology in which multiple cells serve one UE simultaneously. The UE camp on a set of virtual cells and is in an idle state. The UE includes: a receiving unit and a processing unit;
the receiving unit, configured to information about a set of virtual cells sent by a network device; and
the processing unit, configured to carry out corresponding processing according to the information about the set of virtual cells received by the receiving unit.

The processing unit includes:
a changing unit, configured to use obtained broadcast information without the need of reading all or a part of the broadcast information again after a camping cell is changed in the set of virtual cells; and/or
an access unit, configured to use an optimal resource of multiple cells in the set of virtual cells without being limited to a resource of one cell to perform access when the UE in the idle state performs access, where the optimal resource includes an RACH resource.

The receiving unit in the UE is further configured to receive the measurement control information allocated by the network device to the UE.

Accordingly, the UE further includes a measuring unit, which is configured to perform measurement according to the measurement control information received by the receiving unit.

The embodiment of the present invention brings the following beneficial effects: a set of virtual cells is introduced so that high-level resources are shared efficiently; the UE can obtain the overall information about the set of virtual cells; and the UE can change the camping cell in the set of virtual cells flexibly without the need of reading the broadcast information again.

### Embodiment 6

An embodiment of the present invention provides a resource management system, where the system includes:
a network device, configured to set information about a set of virtual cells and send the set information about the set of virtual cells to a UE.

The embodiment of the present invention brings the following beneficial effects: a set of virtual cells is introduced so that high-level resources are shared efficiently; compared with the multi-cell setting method in the prior art, the embodiment of the present invention does not need to set information about multiple cells additionally (including a scrambling code and a high-level ID of a cell, IDs of the UE in multiple cells, and physical channel setting), so that the resource management at the time when the UE communicates with multiple cells is greatly simplified.

The embodiments of the present invention may be implemented through software. The software may be stored in a readable storage medium such as a computer hard disk, a buffer, or an optical disk.

The above descriptions are merely exemplary embodiments of the present invention, but are not intended to limit the present invention. Any modifications, equivalent replacements or improvements without departing from the spirit and principle of the invention shall fall within the protection scope of the present invention.

## Claims

1. A resource management method, comprising:
setting (101), by network side, information about a set of virtual cells, wherein the set of virtual cells comprises multiple cells that communicate with a User Equipment, UE, or multiple cells located in the same location; and
sending (102), by the network side, the information about the set of virtual cells.

2. The method according to claim 1, wherein the sending (102), by the network side, the information about the set of virtual cells comprises:
sending, by the network side, the information about the set of virtual cells to a UE that uses resources of multiple cells in the set of virtual cells, or to a UE supporting communication with multiple cells in the set of virtual cells.

3. The method according to claim 1, wherein:
the information about the set of virtual cells comprises: an identifier, ID, of the set of virtual cells, information about each cell in the set of virtual cells, common information of each cell in the set of virtual cells, or antenna setting of each cell in the set of virtual cells, or any combination thereof.

4. The method according to claim 3, wherein:
the information about each cell in the set of virtual cells comprises: an ID of each cell, a service direction, bandwidth, a frequency, or whether being an anchor, or any combination thereof; and
the service direction comprises: uplink and/or downlink.

5. The method according to claim 3 or 4, wherein:
when an anchor cell is set in the set of virtual cells, the ID of the set of virtual cells is an ID of the anchor cell.

6. The method according to claim 1, wherein: before the setting (101), by the network side, the information about the set of virtual cells, the method further comprises:
receiving, by the network side, a result of measuring a signal of a neighboring cell sent by the UE; and
accordingly, the setting (101), by the network side, the information about the set of virtual cells comprises:
setting, by the network side, the information about the set of virtual cells according to the result.

7. The method according to claim 1, further comprising:
by the network side, allocating resources to the UE and/or setting measurement control information for the UE according to a situation of cells used by a UE that uses resources of multiple cells in the set of virtual cells or a UE supporting communication with multiple cells in the set of virtual cells.

8. The method according to claim 7, wherein the allocating, by the network side, the resources to the UE comprises:
allocating, by the network side, ID information and Radio Bearer, RB, information for the UE in the set of virtual cells to the UE.

9. The method according to claim 7, wherein:
the measurement control information comprises: a measurement object, measurement bandwidth, and measurement reporting control;
the setting, by the network side, the measurement control information for the UE comprises:
setting the measurement object as one or more cells in the set of virtual cells;
setting the measurement bandwidth as a sum of bandwidth of cells in the set of virtual cells or a part of the sum; and
in the measurement reporting control, reporting measurement results of multiple cells in the set of virtual cells together.

10. The method according to claim 1, wherein: the sending, by the network side, the information about the set of virtual cells comprises:
sending, by the network side, the information about the set of virtual cells to a UE in an idle state that camp on the set of virtual cells; and
the method further comprises:
setting, by the network side, measurement control information for the UE in the idle state, wherein the measurement control information comprises a measurement object and measurement bandwidth.

11. The method according to claim 1, wherein: before the sending the information about the set of virtual cells, the method further comprises:
receiving, by the network side, a notification of the UE, wherein the received notification of the UE indicates the UE capability; or
obtaining, by the network side, a requirement that the UE needs to communicate with multiple cells.

12. A resource using method, comprising:
receiving, by a User Equipment, UE, information about a set of virtual cells sent by the network side, wherein the set of virtual cells comprises multiple cells that communicate with the UE or multiple cells located in the same location; and
using, by the UE, a radio resource according to the information about the set of virtual cells.

13. The method according to claim 12, wherein:
the information about the set of virtual cells comprises: an identifier, ID, of the set of virtual cells, information about each cell in the set of virtual cells, common information of each cell in the set of virtual cells, or antenna setting of each cell in the set of virtual cells, or any combination thereof.

14. The method according to claim 13, wherein:
the information about each cell in the set of virtual cells comprises: an ID of each cell, a service direction, bandwidth, a frequency, or whether being an anchor, or any combination thereof; and
the service direction comprises: uplink and/or downlink.

15. The method according to any one of claims 12 to 14, wherein:
the UE is in an idle state; and
the method further comprises:
using, by the UE in the idle state, obtained broadcast information after changing a camping cell in the set of virtual cells; and/or
using an optimal resource in multiple cells in the set of virtual cells to perform access when the UE in the idle state performs access.

16. A network device, comprising: a first setting unit and a sending unit;
the first setting unit (301), configured to set information about a set of virtual cells, wherein the set of virtual cells comprises multiple cells that communicate with a User Equipment, UE, or multiple cells located in the same location; and
the sending unit (302), configured to send the information about the set of virtual cells set by the first setting unit (301).

17. The network device according to claim 16, wherein:
the sending unit (302) is configured to send the information about the set of virtual cells to a UE that uses resources of multiple cells in the set of virtual cells, or to a UE supporting communication with multiple cells in the set of virtual cells.

18. The network device according to claim 16, further comprising:
a receiving unit, configured to receive a result of measuring a signal of a neighboring cell sent by the UE; and
accordingly, the first setting unit (301) is configured to set the information about the set of virtual cells according to the result received by the receiving unit.

19. The network device according to claim 16, further comprising:
an allocating unit, configured to allocate identifier, ID, information and Radio Bearer, RB, information for the UE in the set of virtual cells to the UE according to a situation of cells used by the UE.

20. The network device according to claim 16, further comprising:
a second setting unit, configured to, settingaccording to a situation of cells used by the UE, set a measurement object of the UE as the set of virtual cells, set measurement bandwidth of the UE as a sum of bandwidth of the cells in the set of virtual cells or a part of the sum; and, in measurement reporting control, report measurement results of multiple cells in the set of virtual cells together.

21. A User Equipment, UE, comprising: a receiving unit and a processing unit;
the receiving unit, configured to receive information about a set of virtual cells sent by a network device; and
the processing unit, configured to carry out corresponding processing according to the information about the set of virtual cells received by the receiving unit.

22. The UE according to claim 21, wherein the processing unit comprises:
a changing unit, configured to use obtained broadcast information after changing a camping cell in the set of virtual cells; and/or
an access unit, configured to use an optimal resource in multiple cells in the set of virtual cells to perform access when the UE in an idle state performs access.

23. The UE according to claim 21, wherein:
the receiving unit is further configured to receive measurement control information allocated by the network device to the UE.
